# EUROPÄISCHE PATENTSCHRIFT

(11) **EP 3 653 921 B1**
(45) Veröffentlichungstag und Bekanntmachung des Hinweises auf die Patenterteilung: **05.05.2021**
(21) Anmeldenummer: 18205933.7
(22) Anmeldetag: 13.11.2018
(51) Int. Cl.: F16P 3/08

(54) **ZUHALTEVORRICHTUNG**
LOCKING DEVICE
DISPOSITIF DE BLOCAGE

(43) Veröffentlichungstag der Anmeldung: 20.05.2020
(73) Patentinhaber: EUCHNER GmbH + Co. KG, 70771 Leinfelden-Echterdingen (DE)
(72) Erfinder: Häußler, Johannes, 73087 Bad Boll (DE)
(74) Vertreter: Ruckh, Rainer Gerhard

(56) Entgegenhaltungen:
- DE-A1-102007 013 479
- DE-T2- 69 926 455

## Beschreibung

Die Erfindung betrifft eine Zuhaltevorrichtung gemäß dem Oberbegriff des Anspruchs 1.

Im Bereich der Sicherheitstechnik, das heißt im Bereich der Maschinensicherheit, werden Sicherheitsschalter bekanntermaßen zur Sicherung von Zugängen von Gefahrenbereichen eingesetzt. Beispielsweise kann mit einem Sicherheitsschalter eine trennende Schutzeinrichtung wie zum Beispiel eine Schutztür als Zugang zu einem Gefahrenbereich abgesichert werden. Der Betrieb einer gefahrbringenden Anlage innerhalb des Gefahrenbereichs wird von einer Sicherheitssteuerung nur dann freigegeben, wenn mit dem Sicherheitsschalter festgestellt wird, dass sich die trennende Schutzeinrichtung in ihrer Schließstellung befindet. Hierzu kann der Sicherheitsschalter beispielsweise eine RFID-Einheit aufweisen, mit der ein der trennenden Schutzeinrichtung zugeordneter Transponder erfasst wird.

Zur Zuhaltung der trennenden Schutzeinrichtung, insbesondere der Schutztür, kann eine Zuhaltevorrichtung vorgesehen sein. Die Zuhaltung der trennenden Schutzeinrichtung erfolgt derart, dass ein Zuhalteelement der Zuhaltevorrichtung, insbesondere ein Zuhaltebolzen in eine Sperrstellung eingefahren wird. Zum Einfahren des Zuhalteelements in die Sperrstellung ist ein Aktor vorgesehen. Dieser Aktor kann beispielsweise ein elektrischer Antrieb, wie Elektromotor oder Elektromagnet sein.

Aus der WO 2015/028106 A1 ist ein Sicherheitsschalter mit einem zugeordneten Betätiger bekannt, welche eine Sicherheitseinrichtung bilden, mit der eine Schutztür darauf überwacht wird, ob diese geschlossen ist. Der Sicherheitsschalter weist als Zuhalteelement einen Zuhaltebolzen auf, der entlang der Längsachse des Sicherheitsschalters zwischen einer Entriegelungsstellung und einer Verriegelungsstellung bewegt werden kann. In der Verriegelungsstellung ragt der Betätiger in einen Schalterkopf an der Oberseite des Sicherheitsschalters. Um den Betätiger in eine Schließstellung einzubringen wird dieser quer zur Längsachse des Zuhaltebolzens bewegt und durch eine seitliche Öffnung des Schalterkopfs in diesen eingeführt. Die Vorderseite des Betätigers weist eine Rampe mit einer Schrägfläche auf. Bei Einführen des Betätigers in den Schalterkopf drückt die Rampe des Betätigers den Zuhaltebolzen gegen eine Stellkraft aus der Verriegelungsstellung in Richtung des Sicherheitsschalters, so dass der Betätiger über den Zuhaltebolzen gleiten kann. Der Betätiger weist ein Langloch auf. Befindet sich der Zuhaltebolzen im Bereich des Langlochs wird der Zuhaltebolzen durch die Stellkraft in seine Verriegelungsstellung zurückgeführt und wird im Langloch gehalten, wodurch eine Zuhaltung des Betätigers in seiner Schließstellung bewirkt ist.

Die seitliche Kraftbeaufschlagung des Zuhaltebolzens durch den Betätiger stellt eine hohe mechanische Beanspruchung des Zuhaltebolzens dar, wobei der Zuhaltebolzen insbesondere stark auf Biegung beansprucht wird. Um diesen Beanspruchungen Stand halten zu können, muss der Zuhaltebolzen hohen Festigkeitsanforderungen genügen und daher entsprechend hinsichtlich Material und Dimensionierung ausgelegt werden.

Die DE 10 2007 013 479 A1 betrifft eine Vorrichtung zum lösbaren Verriegeln eines geschlossenen Zustandes einer Raumtrenneinrichtung, insbesondere eine Schutzeinrichtung einer Maschine. Die Vorrichtung weist ein erstes Teil mit einer Öffnung und ein zweites Teil auf, die relativ zueinander bewegbar sind, wodurch die Öffnung mindestens teilweise schließbar ist. Die Vorrichtung weist einen Riegel und ein drehbares Betätigungselement auf, das über eine Koppeleinrichtung mit dem Ring verbunden ist, wobei der Riegel durch Drehen des Betätigungselements um eine Drehachse von einer den geschlossenen Zustand der Raumtrenneinrichtung nicht -verriegelnden Position in eine verriegelnde Position überführbar ist. Die Vorrichtung ist von einem Betriebszustand in einen Konfigurationszustand überführbar. In dem Konfigurationszustand ist die den Riegel in seine verriegelnde Position überführende Drehrichtung des Betätigungselements umkehrbar.

Die DE 699 26 455 T2 betrifft ein Schlüsselsicherheitsschaltergerät, welches ein kastenförmiges Gehäuse aufweist. An diesem Gehäuse sind in unterschiedlichen Positionen schlüsselartige Elemente anbringbar.

Der Erfindung liegt die Aufgabe zugrunde, eine Zuhaltevorrichtung der eingangs genannten Art bereitzustellen, welche eine hohe Funktionalität und platzsparende Bauweise aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Zuhaltevorrichtung für einen Sicherheitsschalter mit einem in einer Bewegungsachse linear zwischen einer Entriegelungsstellung und einer Verriegelungsstellung verfahrbaren Zuhalteelement und mit einer dem Zuhalteelement zugeordneten Verriegelungseinheit, welche in Richtung der Bewegungsachse relativ zum Zuhalteelement bewegbar ist. Die Verriegelungseinheit ist in eine Zuhalteposition im Zuhalteelement einbringbar, wodurch eine Zuhaltung bewirkt ist, dass die Verriegelungseinheit Bestandteil eines dem Sicherheitsschalter zugeordneten Betätigers ist, dass die Verriegelungseinheit zwei Betätigerarme aufweist, die am Betätiger schwenkbar gelagert sind und dass die Betätigerarme spiegelsymmetrisch zu einer Spiegelebene ausgebildet sind, wobei die Schwenkachsen der Betätigerarme parallel zueinander verlaufen.

Die erfindungsgemäße Zuhaltevorrichtung bildet mit einem Sicherheitsschalter eine Sicherheitseinrichtung, mit der insbesondere eine trennende Schutzeinrichtung wie zum Beispiel eine Schutztür als Zugang zu einem Gefahrenbereich, in welchem sich eine gefahrbringende Anlage befindet, abgesichert wird. Mit dem Sicherheitsschalter wird überwacht, ob sich die trennende Schutzeinrichtung in ihrer Schließstellung befindet. Durch Überführung des Zuhalteelements der Zuhaltevorrichtung in seine Verriegelungsstellung kann die trennende Schutzeinrichtung in dieser Schließstellung zugehalten werden. Nur wenn der Sicherheitsschalter die trennende Schutzeinrichtung in ihrer Schließstellung detektiert und die Zuhaltevorrichtung die trennende Schutzeinrichtung in ihrer Schließstellung

zugehalten wird, generiert die Sicherheitseinrichtung ein Freigabesignal mit dem der Betrieb der gefahrbringenden Anlage freigegeben ist.

Die Schließstellung der trennenden Schutzeinrichtung wird vorteilhaft mit einem RFID-System kontrolliert. Vorteilhaft umfasst das RFID-System einen Transponder, der mit einer RFID-Einheit im Sicherheitsschalter zusammenwirkt.

Befindet sich die trennende Schutzeinrichtung in der Schließstellung, ist der Transponder in so geringem Abstand zur RFID-Einheit angeordnet, dass diese Signale aus dem Transponder auslesen kann und so die Schließstellung der trennenden Schutzeinrichtung kontrollieren kann.

Erfindungsgemäß ist die Verriegelungseinheit der Zuhaltevorrichtung Bestandteil eines Betätigers, der zweckmäßig an der trennenden Schutzeinrichtung angebracht ist. Dann wird bei Einfahren der trennenden Schutzeinrichtung in ihre Schließstellung die am Betätiger angeordnete Verriegelungseinheit in Eingriff mit dem Zuhalteelement des Sicherheitsschalters gebracht, wodurch die Zuhaltung der trennenden Schutzeinrichtung bewirkt ist.

Ein wesentlicher Aspekt der Erfindung besteht darin, dass die Verriegelungseinheit in Richtung der Bewegungsachse des Zuhalteelements auf dieses zubewegt wird, um die Zuhaltung zu bewirken.

Besonders vorteilhaft ist das Zuhalteelement ein Zuhaltebolzen, dessen Längsachse mit der Bewegungsachse zusammenfällt.

Generell übt dabei die Verriegelungseinheit auf das Zuhalteelement, insbesondere dem Zuhaltebolzen, nur in axialer Richtung Kräfte aus. Dagegen werden Querkräfte auf das Zuhalteelement weitestgehend vermieden, das heißt das Zuhalteelement wird nicht oder nur sehr wenig auf Biegung beansprucht.

Damit muss das Zuhalteelement keinen erhöhten Festigkeitsanforderungen genügen und kann daher eine entsprechend schmalere Bauform und auch einen einfachen Aufbau aufweisen. Damit kann das Zuhalteelement platzsparend im Sicherheitsschalter integriert werden, insbesondere auch dann, wenn dieser selbst eine schmale Bauform aufweist.

Erfindungsgemäß weist die Verriegelungseinheit zwei Betätigerarme auf, die am Betätiger schwenkbar gelagert sind.

Dabei sind die Betätigerarme spiegelsymmetrisch zu einer Spiegelebene ausgebildet, wobei die Schwenkachsen der Betätigerarme parallel zueinander verlaufen.

Vorteilhaft sind die Betätigerarme durch ein Federelement verbunden, wobei die Betätigerarme durch eine vom Federelement ausgeübte Federkraft auf Abstand zueinander gehalten sind.

Die so ausgebildete Verriegelungseinheit weist einen einfachen, robusten Aufbau auf, wobei insbesondere vorteilhaft ist, dass die Verriegelungseinheit aus nur wenigen Einzelteilen besteht.

Angepasst an diese vorzugsweise vom Betätiger angeordnete Verriegelungseinheit ist am Sicherheitsschalter ein Zuhaltemodul vorgesehen. Das Zuhaltemodul weist zwei beiderseits des Zuhalteelements angeordnete Führungselemente auf, welche Führungsflächen aufweisen, die für eine Zwangsführung für die Betätigerarme ausgebildet sind.

Vorteilhaft bilden die Führungen eine bezüglich einer Spiegelebene spiegelsymmetrische Anordnung aus, wobei die Bewegungsachse des Zuhalteelements in der Spiegelebene verläuft.

Die Symmetrie der Führungen ist somit an die Symmetrie der Verriegelungseinheit angepasst.

Generell ist die durch die Führungsflächen der Führungen ausgebildete Zwangsführung derart ausgebildet, dass die Betätigerarme durch diese Zwangsführung bei Annähern an das Zuhalteelement selbsttätig in eine Zuhalteposition überführt werden, in welcher die Betätigerarme auf das Zuhalteelement eine die Zuhaltung bewirkende Kraft ausüben. Die Zuhaltung wird somit allein durch die geometrisch an die Betätigerarme angepasste Führungen erhalten. Der so ausgebildete Mechanismus zur Bewirkung der Zuhaltung weist somit einen äußerst einfachen und auch robusten Aufbau auf.

Gemäß einer besonders vorteilhaften Ausgestaltung weisen die Führungsflächen einen trichterförmigen Einführbereich, einen an diesen anschließenden Verengungsbereich und einen an diesen anschließenden Aufweitungsbereich auf.

Dabei weist jeder Betätigerarm an seinem freien Ende eine Verdickung mit einer konvexen Außenkontur auf. Der Abstand der Führungsflächen der Führungselemente ist im Verengungsbereich an die Summe der Breiten der Betätigerarme im Bereich der Verdickung angepasst. Die Führungsflächen der Führungselemente im Aufweitungsbereich weisen jeweils eine an die Kontur der Verdickung des zugeordneten Betätigerarms angepasste konkave Kontur auf.

Die Funktionsweise zur Bewirkung der Zuhaltung ist dann derart, dass bei Annäherung der Verriegelungseinheit an das Zuhalteelement die Betätigerarme durch Führen im trichterförmigen Einführbereich gegen die Federkraft des Federelements zusammengeführt sind, die Betätigerarme bei Führen im Verengungsbereich das Zuhalteelement gegen eine auf dieses ausgeübte Stellkraft aus der Verriegelungsstellung heraus bewegen, und dass bei in den Aufweitungsbereich geführten Betätigerarme diese durch die Federkraft auf Abstand gehalten sind, so dass das Zuhalteelement zwischen diesen in die Verriegelungsstellung überführt ist, wobei die Verdickungen der Betätigerarme an den Führungsflächen des Aufweitungsbereichs anliegen, wodurch eine die Zuhaltung bewirkende Anpresskraft auf das Zuhalteelement und die Führungsflächen ausgeübt ist.

Der sich vom äußeren Rand nach innen kontinuierlich verjüngende Einführbereich bewirkt eine Fangfunktion für die Betätigerarme. Durch den großen Durchmesser des Trichters werden die Betätigerarme sicher in diesem Trichter eingefangen. Bei weiterer Annäherung der Betätigerarme an das Zuhalteelement werden diese in den immer schmäler werdenden Trichter eingeführt. Dabei werden die Betätigerarme entgegen der Federkraft des Federelements immer weiter gegeneinander geführt bis diese am Ausgang des Trichters eng aneinander anliegen. Im anschließenden Verengungsbereich bleiben die Betätigerarme eng aneinander gedrückt, so dass diese von oben gegen das Zuhalteelement drücken. Durch die weitere Bewegung der Betätigerarme in Richtung der Bewegungsachse drücken die Betätigerarme auf eine Stirnseite des Zuhalteelements und bewegen dieses aus seiner Verriegelungsstellung,

Dabei wird ausgenutzt, dass das Zuhalteelement nur mit einem Aktor zwischen der Entriegelungsstellung und Verriegelungsstellung bewegbar ist, jedoch in der Verriegelungsstellung mittels einer Stellkraft, insbesondere einer Federkraft oder magnetischen Kraft in der Verriegelungsstellung gehalten wird. Der Aktor kann von einem Elektromotor, einem Elektromagneten, der nach dem Arbeitsstromprinzip oder Ruhestromprinzip arbeitet, oder von einem bistabilen Elektromagneten gebildet sein. Durch Andrücken der Betätigerarme auf die Stirnseite des Zuhalteelements wird somit bei einer weiteren Bewegung der Betätigerarme in Richtung der Bewegungsachse das Zuhalteelement gegen die wirkende Stellkraft aus seiner Verriegelungsstellung herausbewegt.

Bei einer weiteren Bewegung der Betätigerarme in Richtung der Bewegungsachse gelangen diese in den Aufweitungsbereich. Da dieser gegenüber dem Verengungsbereich verbreitert ist, werden die Betätigerarme durch die Federkraft auseinander gedrückt, so dass das Zuhalteelement zwischen den Betätigerarmen mittels der wirkenden Stellkraft in die Verriegelungsstellung zurückbewegt wird. Dann liegen die Betätigerarme seitlich am Zuhalteelement an. Wesentlich dabei ist, dass durch das Anliegen der Verdickungen der Betätigerarme an den Führungsflächen des Aufweitungsbereichs die Betätigerarme auf das Zuhalteelement eine Anpresskraft bewirken, wodurch die Zuhaltung aktiviert ist.

Die Deaktivierung der Zuhaltung erfolgt durch eine Bewegung der Verriegelungseinheit in umgekehrter Richtung. Hierzu wird zunächst das Zuhalteelement mittels eines Betätigerelements, vorzugsweise eines Magneten entsperrt und aus der Verriegelungsstellung zurückgezogen. Dann können bei Entfernen der Verriegelungseinheit vom Zuhalteelement die Betätigerarme durch sukzessive Führung über den Aufweitungsbereich, den Verengungsbereich und den trichterförmigen Einführbereich aus dem Zuhaltemodul herausgefahren werden.

Damit zur Bewirkung der Zuhaltung die Betätigerarme eine definierbare Kraft auf das Zuhalteelement ausüben, sind die Außenkonturen der Verdickungen der Betätigerarme an die Kontur der Führungsflächen im Aufweitungsbereich entsprechend anpassbar.

Besonders vorteilhaft weisen die Betätigerarme im Bereich der Verdickungen jeweils eine kreiszylindrische Außenkontur auf, deren Mittelpunkte denselben Abstand wie die Schwenkachsen der Betätigerarme aufweisen.

Durch diese spezielle Geometrie ist gewährleistet, dass auch dann eine sichere Zuhaltung bewirkt ist, wenn die Verriegelungseinheit mit den Betätigerarmen seitlich etwas versetzt zum Zuhalteelement ist. In diesem Fall verlaufen die Längsachsen der Betätigerarme nicht parallel zur Längsachse des Zuhalteelements. Vielmehr sind die Betätigerarme seitlich ausgelenkt, so dass die Längsachsen der Betätigerarme Seiten eines Parallelogramms bilden. Durch die kreiszylindrischen Ausbildungen der Außenkonturen der Verdickungen der Betätigerarme liegen trotz des Versatzes der Betätigerarme die Verdickungen vollflächig an den Grenzflächen des Aufweitungsbereichs und sorgen für eine gleichmäßig auf beide Betätigerarme verteilte Zuhaltekraft.

Erfindungsgemäß ist ein modulares Sicherheitssystem mit einem Sicherheitsschalter und einem zugeordneten Betätiger vorgesehen, wobei am Sicherheitsschalter unterschiedliche Zuhaltemodule anbringbar sind und wobei die Zuhaltemodule für unterschiedliche Anfahrrichtungen des Betätigers auf den Sicherheitsschalter ausgebildet sind.

Besonders vorteilhaft ist ein erstes Zuhaltemodul für eine Anfahrrichtung des Betätigers quer zur Längsachse eines im Sicherheitsschalter vorgesehenen Zuhalteelements ausgebildet. Ein weiteres Zuhaltemodul ist für eine Anfahrrichtung des Betätigers in Richtung der Längsachse des Zuhalteelements ausgebildet.

Durch einen Austausch des Zuhaltemoduls ist auf einfache Weise eine Anpassung an unterschiedliche Applikationen möglich.

Ein wesentlicher Vorteil besteht darin, dass mit unterschiedlichen Zuhaltemodulen unterschiedliche Anfahrrichtungen des Betätigers realisiert werden können.

Die Erfindung wird im Folgenden anhand der Zeichnungen erläutert. Es zeigen:
- Figur 1:: Erstes Ausführungsbeispiel einer erfindungsgemäßen Sicherheitseinrichtung mit einem Sicherheitsschalter und einem zugeordneten Betätiger.
- Figur 2a - 2c:: Darstellung einer Verriegelungseinheit des Betätigers in unterschiedlichen Positionen zu einem Zuhaltemodul des Sicherheitsschalters für die Anordnung gemäß Figur 1.
- Figur 3:: Zweites Ausführungsbeispiel einer erfindungsgemäßen Sicherheitseinrichtung mit einem Sicherheitsschalter und einem zugeordneten Betätiger.
- Figur 4a - 4c:: Darstellung des Betätigers in unterschiedlichen Positionen zum Sicherheitsschalter für die Anordnung gemäß Figur 3.

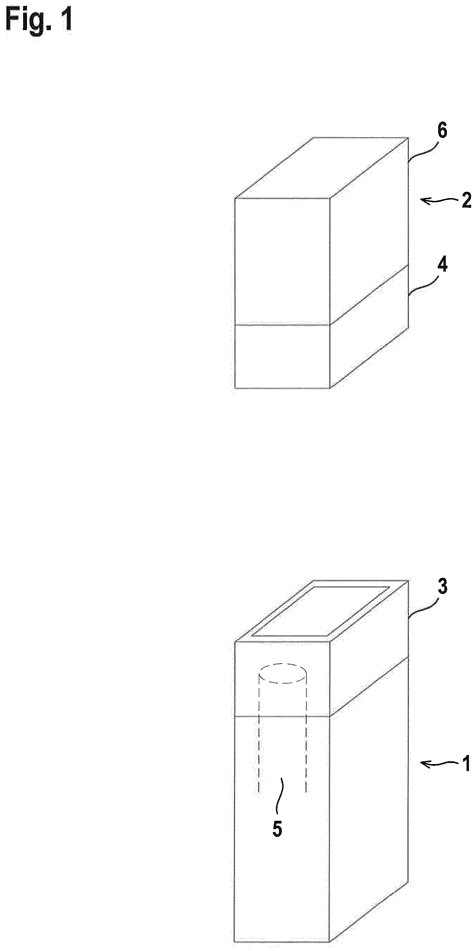

Figur 1 zeigt ein erstes Ausführungsbeispiel einer Sicherheitseinrichtung mit einem Sicherheitsschalter 1 und einem Betätiger 2. Die Sicherheitseinrichtung weist eine Zuhaltevorrichtung auf, die ein Zuhaltemodul 3 am Sicherheitsschalter 1 und eine Verriegelungseinheit 4 am Betätiger 2 aufweist.

Mit der Sicherheitseinrichtung kann eine trennende Schutzeinrichtung wie zum Beispiel eine Schutztür als Zugang zu einem Gefahrenbereich abgesichert und überwacht werden. Im Gefahrenbereich findet sich eine gefahrbringende Anlage, deren Steuerung mit Ausgangssignalen der Sicherheitseinrichtung angesteuert werden kann. Mit dem Sicherheitsschalter 1 wird überwacht, ob sich die trennende Schutzeinrichtung in ihrer Schließstellung befindet. Der Betätiger 2 ist mit der trennenden Schutzeinrichtung verbunden und mit dieser gegenüber dem Sicherheitsschalter 1 bewegbar. Die Schließstellung der trennenden Schutzeinrichtung wird dadurch erfasst, dass der Betätiger 2 in einer entsprechenden Schließstellung am Sicherheitsschalter 1 detektiert wird, was vorteilhaft mittels eines RFID-Systems erfolgt. Mit der Zuhaltevorrichtung kann eine Zuhaltung derart bewirkt werden, dass die trennende Schutzeinrichtung in ihrer Schließstellung zugehalten werden. Die Sicherheitseinrichtung generiert als Ausgangssignal ein Freigabesignal für die Freigabe des Betriebs der Anlage nur dann, wenn mit dem Sicherheitsschalter 1 die trennende Schutzeinrichtung in ihrer Schließstellung erkannt wird und die trennende Schutzeinrichtung mit der Zuhaltevorrichtung in der Schließstellung zugehalten ist.

Als Bestandteil der Zuhaltevorrichtung ist im Sicherheitsschalter 1 ein Zuhalteelement in Form eines Zuhaltebolzens 5 vorgesehen. Die Längsachse des Zuhaltebolzens 5 verläuft in Richtung der Längsachse des Sicherheitsschalters 1. Die Längsachse des Zuhaltebolzens 5 bildet eine Bewegungsachse entlang derer der Zuhaltebolzen 5 verschoben werden kann.

Dabei ist ein nicht dargestellter elektrischer Antrieb vorgesehen, mittels dessen der Zuhaltebolzen 5 zwischen einer Entriegelungsstellung, in der der Zuhaltebolzen 5 in den Sicherheitsschalter 1 weit eingefahren ist, und einer Verriegelungsstellung, in der der Zuhaltebolzen 5 weit über die obere Stirnseite des Sicherheitsschalters 1 ausgefahren ist, verfahren werden kann. In der Verriegelungsstellung ist der Zuhaltebolzen 5 in den Bereich des Zuhaltemoduls 3 eingefahren. Der Zuhaltebolzen 5 ist dabei mittels einer Stellkraft, insbesondere von einer von einem Federsystem generierten Federkraft oder von einem Aktor bewirkten Magnetkraft in der Verriegelungsstellung gehalten. Zur Entriegelung des Zuhalteelements ist ein Betätigungselement vorzugsweise in Form eines Magneten vorgesehen.

Erfindungsgemäß wird der Betätiger 2 in Richtung der Bewegungsachse auf den Sicherheitsschalter 1 zu bewegt, wenn die trennende Schutzeinrichtung in ihre Schließstellung eingefahren wird.

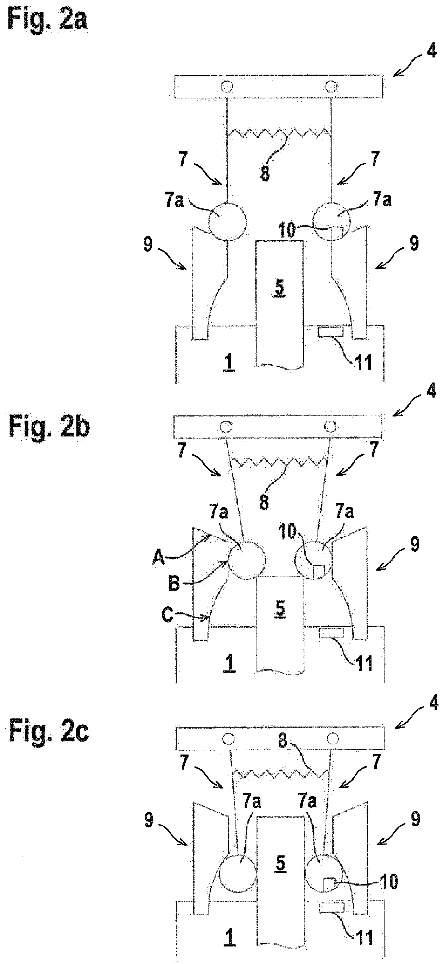

Die Figuren 2a - 2c zeigen schematisch die Komponenten der Verriegelungseinheit 4 des Betätigers 2 und des Zuhaltemoduls 3 am Sicherheitsschalter 1.

Die Verriegelungseinheit 4 weist zwei identisch ausgebildete, spiegelsymmetrisch an einem Grundkörper 6 schwenkbar gelagerte Betätigerarme 7 auf. Die Schwenkachsen verlaufen parallel zueinander und senkrecht zu den Zeichnungsebenen der Figuren 2a - 2c.

Jeder Betätigerarm 7 bildet an seinem freien Ende eine Verdickung 7a aus, die eine kreiszylindrische Außenkontur aufweist.

Die Betätigerarme 7 sind durch ein Federelement 8 verbunden. Durch die vom Federelement 8 ausgeübte Federkraft werden die Betätigerarme 7 auseinandergedrückt und so auf Abstand gehalten.

Das auf der oberen Stirnseite des Sicherheitsschalters 1 aufgebrachte Zuhaltemodul 3 weist, wie die Figuren 2a - 2c zeigen, zwei identische, spiegelsymmetrische Führungselemente 9 auf. Die einander zugewandten Oberflächen der Führungselemente 9 bilden Führungsflächen für eine Zwangsführung der Betätigerarme 7 aus.

Die im äußeren Randbereich der Führungselemente 9 liegenden Segmente A der Führungsflächen bilden einen trichterförmigen Einführbereich aus, der sich vom äußeren Rand der Führungselemente 9 nach innen kontinuierlich verjüngt.

Die daran anschließenden Segmente B der Führungsflächen bilden einen Verengungsbereich aus. Dort ist der Abstand der Führungsflächen im Wesentlichen konstant und etwas größer als die Summe der Querschnitte der Verdickungen 7a der Betätigerarme 7.

Die daran anschließenden Segmente C der Führungsflächen bilden einen Aufweitungsbereich aus. Dort weisen die Führungsflächen jeweils eine konkave Kontur aus, die an die Außenkonturen der Verdickungen 7a der Betätigerarme 7 angepasst sind.

Die Funktionsweise der so ausgebildeten Zuhaltevorrichtung ist wie folgt.

Der sich vom äußeren Rand nach innen kontinuierlich verjüngende Einführbereich bewirkt eine Fangfunktion für die Betätigerarme 7. Durch den großen Durchmesser des Trichters werden die Betätigerarme 7 sicher in diesem Trichter eingefangen, wenn sich der Betätiger 2 dem Sicherheitsschalter 1 nähert. Bei weiterer Annäherung werden die Betätigerarme 7 in den immer schmäler werdenden Trichter eingeführt. Dabei werden die Betätigerarme 7 entgegen der Federkraft des Federelements 8 immer weiter gegeneinander geführt, bis diese am Ausgang des Trichters eng aneinander anliegen. Im anschließenden Verengungsbereich bleiben die Betätigerarme 7 eng aneinander gedrückt, so dass diese von oben gegen den Zuhaltebolzen 5 drücken. Durch die weitere Bewegung des Betätigers 2 in Richtung des Sicherheitsschalters 1 drücken die Betätigerarme 7 auf eine Stirnseite des Zuhaltebolzens 5 und bewegen diesen aus einer Verriegelungsstellung nach unten entgegen der Stellkraft des Federsystems oder Magneten.

Bei einer weiteren Bewegung des Betätigers 2 in Richtung des Sicherheitsschalters 1 gelangen die Betätigerarme 7 in den Aufweitungsbereich. Da dieser gegenüber dem Verengungsbereich verbreitert ist, werden die Betätigerarme 7 durch die Federkraft des Federelements 8 auseinander gedrückt, so dass der Zuhaltebolzen 5 zwischen den Betätigerarmen 7 mittels der wirkenden Stellkraft in die Verriegelungsstellung zurückbewegt ist. Dann liegen die Betätigerarme 7 seitlich am Zuhaltebolzen 5 an. Wesentlich dabei ist, dass durch das Anliegen der Verdickungen 7a der Betätigerarme 7 an den Führungsflächen des Aufweitungsbereichs die Betätigerarme 7 auf das Zuhalteelement und die Führungsflächen eine Anpresskraft bewirken, wodurch die Zuhaltung aktiviert ist. Bei in dem Aufweitungsbereich gelagerten Betätigerarme 7 ist die trennende Schutzeinrichtung in ihre Schließstellung eingefahren und wird dort durch die Zuhaltung sicher gehalten. Zur Detektion der Schließstellung ist ein RFID-System vorgesehen, das einen Transponder 10 in der Verdickung 7a einer der Betätigerarme 7 und eine RFID-Einheit 11, das heißt ein Lesegerät im Sicherheitsschalter 1 umfasst. Befindet sich die trennende Schutzeinrichtung in der Schließstellung, können mit der RFID-Einheit 11 Signale aus dem Transponder 10 ausgelesen werden.

Die Deaktivierung der Zuhaltung erfolgt durch eine Bewegung der Verriegelungseinheit 4 in umgekehrter Richtung. Hierzu wird zunächst das Zuhalteelement mittels des Magneten entsperrt und aus der Verriegelungsstellung zurückgezogen. Dann können bei Entfernen der Verriegelungseinheit 4 vom Zuhalteelement die Betätigerarme 7 durch sukzessiven Führungen über den Aufweitungsbereich, dem Verengungsbereich und dem trichterförmigen Einführbereich aus dem Zuhaltemodul 3 herausgefahren werden.

Damit zur Bewirkung der Zuhaltung die Betätigerarme 7 eine definierte Kraft auf das Zuhalteelement ausüben, sind die Außenkonturen der Verdickungen 7a der Betätigerarme 7 an die Konturen der Führungsflächen im Aufweitungsbereich entsprechend anpassbar.

Durch die kreiszylindrische Geometrie der Verdickungen 7a der Betätigerarme 7 ist gewährleistet, dass auch dann eine sichere Zuhaltung bewirkt ist, wenn die Verriegelungseinheit 4 mit den Betätigerarmen 7 seitlich etwas versetzt zum Zuhaltebolzen 5 ist. In diesem Fall verlaufen die Längsachsen der Betätigerarme 7 nicht parallel zur Längsachse des Zuhaltebolzens 5. Vielmehr sind die Betätigerarme 7 seitlich ausgelenkt, so dass die Längsachsen der Betätigerarme 7 Seiten eines Parallelogramms bilden. Durch die kreiszylindrischen Konturen der Verdickungen 7a der Betätigerarme 7 liegen diese vollflächig an den Grenzflächen des Aufweitungsbereichs und sorgen für eine gleichmäßig auf beide Betätigerarme 7 verteilte Zuhaltekraft.

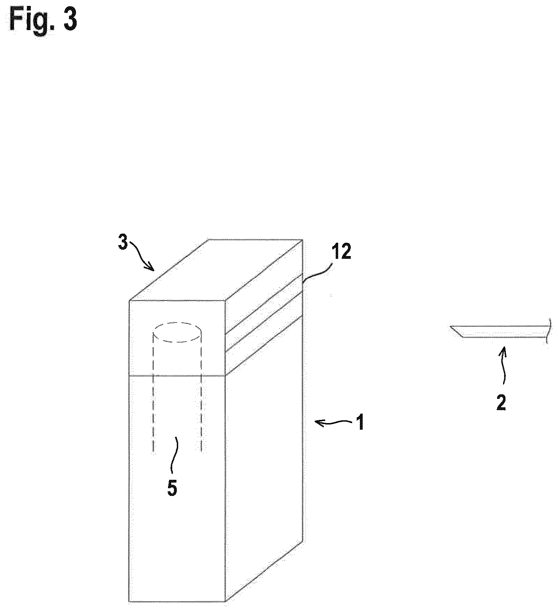

Erfindungsgemäß bildet der Sicherheitsschalter 1 mit dem Zuhaltemodul 3 ein modulares Sicherheitssystem, bei dem das Zuhaltemodul 3 am Sicherheitsschalter 1 gegen ein anderes Zuhaltemodul 3 ausgetauscht werden kann. Ein solches weiteres Zuhaltemodul 3 am Sicherheitsschalter 1 zeigt Figur 3. Dieses Zuhaltemodul 3 weist eine seitliche Einführöffnung 12 über welche der an der trennenden Schutzeinrichtung befestigte Betätiger 2 einführbar ist. Anders als bei dem Ausführungsbeispiel gemäß Figur 1 wird der Betätiger 2 senkrecht zur Längsachse des Zuhaltebolzens 5 bewegt.

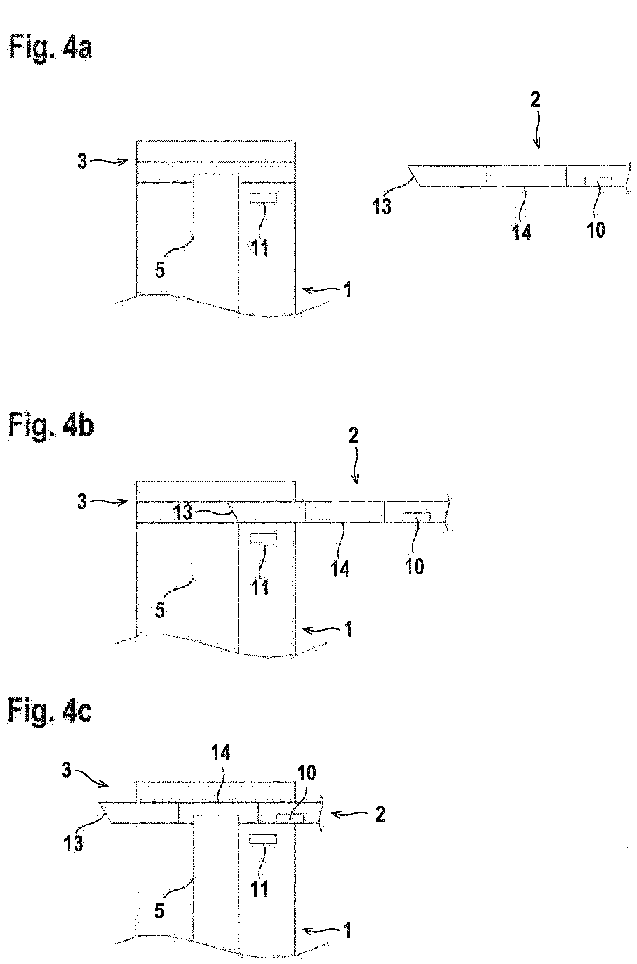

Die Figuren 4a - 4c zeigen das Einfahren des Betätigers 2 in die Schließstellung am Sicherheitsschalter 1. Wie die Figuren 4a - 4c zeigen, ist die Höhe des Betätigers 2 etwas geringer als die Höhe der Einführöffnung 12, damit der Betätiger 2 in diese Einführöffnung 12 eingefahren werden kann.

Der Betätiger 2 bildet an seinem vorderen Rand durch eine Schrägfläche 13 eine Rampe aus. Im Zentrum des Betätigers 2 befindet sich ein Loch 14. An das Loch 14 angrenzend ist der Transponder 10 angeordnet.

Wie die Figuren 4a - 4c zeigen, wird bei Einfahren der trennenden Schutzeinrichtung in die Schließstellung der Betätiger 2 in die Einführöffnung 12 eingeführt. Mit der Rampe wird der Zuhaltebolzen 5 von der Verriegelungsstellung gegen die Stellkraft nach unten gedrückt. Wenn sich die trennende Schutzeinrichtung in der Schließstellung befindet, befindet sich das Loch 14 im Bereich des Zuhaltebolzens 5 und der Zuhaltebolzen 5 wird durch die Stellkraft in das Loch 14 eingeführt. Damit ist die Zuhaltung aktiviert.

In dieser Position des Betätigers 2 können mit der RFID-Einheit 11 die im Transponder 10 gespeicherten Signale ausgelesen werden, wodurch die Schließstellung der trennenden Schutzeinrichtung detektiert wird.

Die Deaktivierung der Zuhaltung erfolgt dadurch, dass der Zuhaltebolzen 5 mit dem Magneten entriegelt wird und aus dem Loch 14 des Betätigers 2 herausgezogen wird. Danach kann der Betätiger 2 aus dem Zuhaltemodul 3 herausgefahren werden.

### Bezugszeichenliste

- (1): Sicherheitsschalter
- (2): Betätiger
- (3): Zuhaltemodul
- (4): Verriegelungseinheit
- (5): Zuhaltebolzen
- (6): Grundkörper
- (7): Betätigerarm
- (7a): Verdickung
- (8): Federelement
- (9): Führungselement
- (10): Transponder
- (11): RFID-Einheit
- (12): Einführöffnung
- (13): Schrägfläche
- (14): Loch
- A: Segment
- B: Segment
- C: Segment

## Patentansprüche

1. Zuhaltevorrichtung für einen Sicherheitsschalter (1) mit einem in einer Bewegungsachse linear zwischen einer Entriegelungsstellung und einer Verriegelungsstellung verfahrbaren Zuhalteelement, wobei eine dem Zuhalteelement zugeordnete Verriegelungseinheit (4) vorgesehen ist, welche entlang der Bewegungsachse relativ zum Zuhalteelement bewegbar ist, wobei die Verriegelungseinheit (4) in eine Zuhalteposition im Zuhalteelement einbringbar ist, wodurch eine Zuhaltung bewirkt ist, wobei die Verriegelungseinheit (4) Bestandteil eines dem Sicherheitsschalter (1) zugeordneten Betätigers (2) ist, wobei die Verriegelungseinheit (4) zwei Betätigerarme (7) aufweist, die am Betätiger (2) schwenkbar gelagert sind und **dadurch gekennzeichnet, dass** die Betätigerarme (7) spiegelsymmetrisch zu einer Spiegelebene ausgebildet sind, wobei die Schwenkachsen der Betätigerarme (7) parallel zueinander verlaufen.

2. Zuhaltevorrichtung nach Anspruch 1, **dadurch gekennzeichnet, dass** das Zuhalteelement ein Zuhaltebolzen (5) ist, dessen Längsachse mit der Bewegungsachse zusammenfällt.

3. Zuhaltevorrichtung nach einem der Ansprüche 1 oder 2, **dadurch gekennzeichnet, dass** die Betätigerarme (7) durch ein Federelement (8) verbunden sind, wobei die Betätigerarme (7) durch eine vom Federelement (8) ausgeübte Federkraft auf Abstand zueinander gehalten sind.

4. Zuhaltevorrichtung nach einem der Ansprüche 1 bis 3, **dadurch gekennzeichnet, dass** am Sicherheitsschalter (1) ein Zuhaltemodul (3) vorgesehen ist, wobei das Zuhaltemodul (3) zwei beiderseits des Zuhalteelements angeordnete Führungselemente (9) aufweist, welche Führungsflächen aufweisen, die für eine Zwangsführung für die Betätigerarme (7) ausgebildet sind.

5. Zuhaltevorrichtung nach Anspruch 4, **dadurch gekennzeichnet, dass** die Führungen eine zu einer Spiegelebene spiegelsymmetrische Anordnung ausbilden, wobei die Bewegungsachse des Zuhalteelements in der Spiegelebene verläuft.

6. Zuhaltevorrichtung nach einem der Ansprüche 4 oder 5, **dadurch gekennzeichnet, dass** die Führungsflächen einen trichterförmigen Einführbereich, einen an diesen anschließenden Verengungsbereich und einen an diesen anschließenden Aufweitungsbereich aufweisen.

7. Zuhaltevorrichtung nach Anspruch 6, **dadurch gekennzeichnet, dass** jeder Betätigerarm (7) an seinem freien Ende eine Verdickung (7a) mit einer konvexen Außenkontur aufweist, und dass der Abstand der Führungsfläche der Führungselemente (9) im Verengungsbereich an die Summe der Breiten der Betätigerarme (7) im Bereich der Verdickungen (7a) angepasst ist, und dass die Führungsflächen der Führungselemente (9) im Aufweitungsbereich jeweils eine an die Kontur der Verdickung (7a) des zugeordneten Betätigerarms (7) angepasste konkave Kontur aufweist.

8. Zuhaltevorrichtung nach Anspruch 7, **dadurch gekennzeichnet, dass** bei Annäherung der Verriegelungseinheit (4) an das Zuhalteelement die Betätigerarme (7) durch Führen im trichterförmigen Einführbereich gegen die Federkraft des Federelements (8) zusammengeführt sind, dass die Betätigerarme (7) bei Führen im Verengungsbereich das Zuhalteelement gegen eine auf dieses ausgeübte Stellkraft aus der Verriegelungsstellung heraus bewegen, und dass bei in den Aufweitungsbereich geführten Betätigerarmen (7) diese durch die Federkraft auf Abstand gehalten sind, so dass das Zuhalteelement zwischen diesen in die Verriegelungsstellung überführt ist, wobei die Verdickungen (7a) der Betätigerarme (7) an den Führungsflächen des Aufweitungsbereichs anliegen, wodurch eine die Zuhaltung bewirkende Anpresskraft auf das Zuhalteelement und die Führungsflächen ausgeübt ist.

9. Zuhaltevorrichtung nach einem der Ansprüche 7 oder 8, **dadurch gekennzeichnet, dass** die Betätigerarme (7) im Bereich der Verdickungen (7a) jeweils eine kreiszylindrische Außenkontur aufweisen, deren Mittelpunkte denselben Abstand wie die Schwenkachsen der Betätigerarme (7) aufweisen.

10. Zuhaltevorrichtung nach einem der Ansprüche 1 bis 9, **dadurch gekennzeichnet, dass** in der Verriegelungseinheit (4) ein Transponder (10) angeordnet ist, welcher mit einer RFID-Einheit (11) im Sicherheitsschalter (1) zusammenwirkt.

11. Modulares Sicherheitssystem mit einem Sicherheitsschalter (1) und einem zugeordneten Betätiger (2), wobei am Sicherheitsschalter (1) ein Zuhaltemodul (3) vorgesehen ist, gemäß einem der Ansprüche 4 bis 10, **dadurch gekennzeichnet, dass** am Sicherheitsschalter (1) unterschiedliche Zuhaltemodule (3) anbringbar sind, wobei die Zuhaltemodule (3) für unterschiedliche Anfahrrichtungen des Betätigers (2) auf den Sicherheitsschalter (1) ausgebildet sind.

12. Modulares Sicherheitssystem nach Anspruch 11, **dadurch gekennzeichnet, dass** ein erstes Zuhaltemodul (3) für eine Anfahrrichtung des Betätigers (2) quer zur Längsachse eines im Sicherheitsschalter (1) vorgesehenen Zuhalteelements ausgebildet ist, und dass ein weiteres Zuhaltemodul (3) für eine Anfahrrichtung des Betätigers (2) in Richtung der Längsachse des Zuhalteelements ausgebildet ist.

## Claims

1. Retaining device for a safety switch (1) with a retaining element movable in a movement axis linearly between an unlocking setting and a locking setting, wherein a locking unit (4) which is associated with the retaining element and which is movable along the movement axis relative to the retaining element is provided, wherein the locking unit (4) can be brought into a retaining position in the retaining element whereby retention is produced, wherein the locking unit (4) is a component of an actuator (2) associated with the safety switch (1) and wherein the locking unit (4) comprises two actuator arms (7) pivotably mounted at the actuator (2), **characterised in that** the actuator arms (7) are constructed in mirror symmetry with respect to a mirror plane, wherein the pivot axes of the actuator arms (7) extend parallel to one another.

2. Retaining device according to claim 1, **characterised in that** the retaining element is a retaining pin (5), the longitudinal axis of which coincides with the movement axis.

3. Retaining device according to one of claims 1 and 2, **characterised in that** the actuator arms (7) are connected by a spring element (8), wherein the actuator arms (7) are kept at a spacing from one another by a spring force exerted by the spring element (8).

4. Retaining device according to any one of claims 1 to 3, **characterised in that** a retaining module (3) is provided at the safety switch (1), wherein the retaining module (3) comprises two guide elements (9), which are arranged on either side of the retaining element and which have guide surfaces configured for constrained guidance for the actuator arms (7).

5. Retaining device according to claim 4, **characterised in that** the guides form an arrangement which is mirror-symmetrical with respect to a mirror plane, wherein the movement axis of the retaining element extends in the mirror plane.

6. Retaining device according to one of claims 4 and 5, **characterised in that** the guide surfaces have a funnel-shaped introduction region, a narrowing region connected therewith and a widening region connected therewith.

7. Retaining device according to claim 6, **characterised in that** each actuator arm (7) has at the free end thereof a thickening (7a) with a convex outer contour, that the spacing of the guide surface of the guide elements (9) in the narrowing region is matched to the sum of the widths of the actuator arms (7) in the region of the thickenings (7a) and that the guide surfaces of the guide elements (9) in the widening region each have a concave contour matched to the contour of the thickening (7a) of the associated actuator arm (7).

8. Retaining device according to claim 7, **characterised in that** on approach of the locking unit (4) to the retaining element the actuator arms (7) are led together against the spring force of the spring element (8) by guidance into the funnel-shaped introduction region, that the actuator arms (7) on guidance into the narrowing region move the retaining element out of the locking setting against a setting force exerted thereon and that when the actuator arms (7) are guided into the widening region these are held at a spacing by the spring force so that the retaining element is transferred between these into the locking setting, wherein the thickenings (7a) of the actuator arms (7) bear against the guide surfaces of the widening region, whereby a pressing force producing the retention is exerted on the retaining element and the guide surfaces.

9. Retaining device according to one of claims 7 and 8, **characterised in that** the actuator arms (7) in the region of the thickenings (7a) each have a circularly cylindrical outer contour, the centre points of which have the same spacing as the pivot axes of the actuator arms (7).

10. Retaining device according to any one of claims 1 to 9, **characterised in that** a transponder (10) which co-operates with an RFID unit (11) in the safety switch (1) is arranged in the locking unit (4).

11. Modular safety system with a safety switch (1) and an associated actuator (2), wherein a retaining module (3) is provided at the safety switch (1), according to any one of claims 4 to 10, **characterised in that** different retaining modules (3) can be mounted at the safety switch (1), wherein the retaining modules (3) are constructed for different movement directions of the actuator (2) on the safety switch (1).

12. Modular safety system according to claim 11, **characterised in that** a first retaining module (3) is constructed for a movement direction of the actuator (2) transversely to the longitudinal axis of a retaining element provided in the safety switch (1) and that a further retaining module is constructed for a movement direction of the actuator (2) in the direction of the longitudinal axis of the retaining element.

## Revendications

1. Dispositif de blocage destiné à un interrupteur de sécurité (1), muni d'un élément d'arrêt pouvant être déplacé linéairement entre une position de déverrouillage et une position de verrouillage, dans un axe de mouvement, sachant qu'il est prévu une unité de verrouillage (4) associée à l'élément d'arrêt et pouvant être mue par rapport audit élément d'arrêt, le long dudit axe de mouvement, ladite unité de verrouillage (4) pouvant être amenée à un emplacement d'arrêt dans ledit élément d'arrêt, un arrêt s'en trouvant ainsi provoqué, laquelle unité de verrouillage (4) fait partie intégrante d'un actionneur (2) affecté à l'interrupteur de sécurité (1), ladite unité de verrouillage (4) étant dotée de deux bras d'actionnement (7) montés à pivotement sur ledit actionneur (2), **caractérisé par le fait que** les bras d'actionnement (7) sont de réalisation spéculaire par rapport à un plan de symétrie, les axes de pivotement desdits bras d'actionnement (7) s'étendant parallèlement l'un à l'autre.

2. Dispositif de blocage selon la revendication 1, **caractérisé par le fait que** l'élément d'arrêt est un goujon d'arrêt (5) dont l'axe longitudinal coïncide avec l'axe de mouvement.

3. Dispositif de blocage selon l'une des revendications 1 ou 2, **caractérisé par le fait que** les bras d'actionnement (7) sont reliés par l'intermédiaire d'un élément élastique (8), lesdits bras d'actionnement (7) étant maintenus espacés l'un de l'autre par une force élastique développée par ledit élément élastique (8).

4. Dispositif de blocage selon l'une des revendications 1 à 3, **caractérisé par le fait qu'**un module de blocage (3) est prévu sur l'interrupteur de sécurité (1), lequel module de blocage (3) comporte deux éléments de guidage (9) situés de part et d'autre de l'élément d'arrêt, pourvus de surfaces de guidage conçues pour un guidage forcé dédié aux bras d'actionnement (7).

5. Dispositif de blocage selon la revendication 4, **caractérisé par le fait que** les guides forment un ensemble spéculaire par rapport à un plan de symétrie, l'axe de mouvement de l'élément d'arrêt s'étendant dans ledit plan de symétrie.

6. Dispositif de blocage selon l'une des revendications 4 ou 5, **caractérisé par le fait que** les surfaces de guidage comprennent une zone infundibuliforme d'insertion, une zone de resserrement attenante à celle-ci, et une zone d'élargissement attenante à cette dernière.

7. Dispositif de blocage selon la revendication 6, **caractérisé par le fait que** chaque bras d'actionnement (7) est muni, à son extrémité libre, d'un renflement (7a) à profil extérieur convexe ; **par le fait que** l'espacement des surfaces de guidage des éléments de guidage (9) est adapté, dans la zone de resserrement, à la somme des largeurs des bras d'actionnement (7) dans la région des renflements (7a) ; et **par le fait que** lesdites surfaces de guidage des éléments de guidage (9) présentent à chaque fois, dans la zone d'élargissement, un profil concave adapté au profil du renflement (7a) du bras d'actionnement (7) associé.

8. Dispositif de blocage selon la revendication 7, **caractérisé par le fait que**, lorsque l'unité de verrouillage (4) se rapproche de l'élément d'arrêt, les bras d'actionnement (7) sont regroupés par guidage dans la zone infundibuliforme d'insertion, en opposition à la force élastique de l'élément élastique (8) ; **par le fait que**, lors d'un guidage dans la zone de resserrement, lesdits bras d'actionnement (7) meuvent ledit élément d'arrêt hors de la position de verrouillage, en opposition à une force de manœuvre appliquée à ce dernier ; et **par le fait que**, lorsque lesdits bras d'actionnement (7) sont guidés pour pénétrer dans la zone d'élargissement, ceux-ci sont maintenus espacés par la force élastique de façon telle que ledit élément d'arrêt soit transféré à la position de verrouillage, entre ces derniers, les renflements (7a) desdits bras d'actionnement (7) étant alors en applique contre les surfaces de guidage de ladite zone d'élargissement, si bien qu'une pression de contact, provoquant l'arrêt, est exercée sur ledit élément d'arrêt et sur lesdites surfaces de guidage.

9. Dispositif de blocage selon l'une des revendications 7 ou 8, **caractérisé par le fait que** les bras d'actionnement (7) sont pourvus à chaque fois, dans la région des renflements (7a), d'un profil extérieur cylindrique circulaire dont les points centraux présentent le même espacement que les axes de pivotement desdits bras d'actionnement (7).

10. Dispositif de blocage selon l'une des revendications 1 à 9, **caractérisé par le fait qu'**un transpondeur (10), intégré dans l'unité de verrouillage (4), coopère avec une unité RFID (11) dans l'interrupteur de sécurité (1).

11. Système modulaire de sécurité comprenant un interrupteur de sécurité (1) et un actionneur (2) associé, un module de blocage (3) conforme à l'une des revendications 4 à 10 étant prévu sur ledit interrupteur de sécurité (1), **caractérisé par le fait que** des modules de blocage (3) différents peuvent être implantés sur l'interrupteur de sécurité (1), lesquels modules de blocage (3) sont conçus pour différentes directions d'approche de l'actionneur (2) vers ledit interrupteur de sécurité (1).

12. Système modulaire de sécurité selon la revendication 11, **caractérisé par le fait qu'**un premier module de blocage (3) est conçu pour une direction d'approche de l'actionneur (2) transversalement par rapport à l'axe longitudinal d'un élément d'arrêt prévu dans l'interrupteur de sécurité (1) ; et **par le fait qu'**un module de blocage (3) supplémentaire est conçu pour une direction d'approche dudit actionneur (2) dans le sens dudit axe longitudinal de l'élément d'arrêt.
